# EUROPEAN PATENT SPECIFICATION

(11) **EP 1 766 752 B1**
(45) Date of publication and mention of the grant of the patent: **25.04.2012**
(21) Application number: 04752518.3
(22) Date of filing: 13.05.2004
(51) Int. Cl.: H04M 1/02

(54) **INTEGRATED CELLULAR PHONE, DIGITAL CAMERA, AND PDA, WITH SWIVEL MECHANISM PROVIDING ACCESS TO THE INTERFACE ELEMENTS OF EACH FUNCTION**
INTEGRIERTES MOBILTELEFON-, DIGITALKAMERA- UND PDA-GERÄT MIT EINEM SCHWENKMECHANISMUS ZUR BEREITSTELLUNG VON ZUGANG ZU DEN SCHNITTSTELLENELEMENTEN JEDER FUNKTION
TÉLÉPHONE CELLULAIRE INTÉGRÉ, APPAREIL PHOTOGRAPHIQUE NUMÉRIQUE, ET PDA, AVEC MÉCANISME DE PERMUTATION DONNANT ACCÈS AUX ÉLÉMENTS D'INTERFACE DE CHAQUE FONCTION

(43) Date of publication of application: 28.03.2007
(73) Proprietor: Flextronics AP, LLC, Niwot, CO 80516 (US)
(72) Inventor: TORNAGHI, Barbara, I-20052 Monza (IT)
(74) Representative: DeVile, Jonathan Mark
(86) International application number: PCT/US2004/015518
(87) International publication number: WO 2005/114807

(56) References cited:
- EP-A- 1 148 406
- EP-A- 1 357 726
- GB-A- 2 315 186
- GB-A- 2 387 063
- US-A1- 2002 102 946
- US-B1- 6 465 913
- US-B1- 6 788 332

## Description

### Field of the Invention

The present invention relates to the field of cellular phones. More particularly, the present invention relates to the field of integrating a cellular phone, a digital camera lens, and a keyboard into a portable handheld device.

### Background of the Invention

Cellular telephones have become an increasingly popular means of communication for today's mobile society. Also, digital camera lenses have been added as a feature on certain commercial cellular telephones, to allow users to communicate and exchange information through pictures. Further, personal digital assistant interfaces have been added on some cellular telephone devices, which allow cellular telephone users to access the web, answer e-mail, and organize appointments. However, conventional multifunction cellular telephones are bulky,complicated, and not user-friendly. Furthermore, conventional multifunction cellular telephones do not allow easy access to all functions through a single mechanical transformation. Due to these problems, conventional multifunction cellular telephones are cumbersome and ill-equipped to handle the multitasking needs of the average cellular telephone user. A prior artexample can be found in US2002/0102946.

What is needed is a multifunction cellular telephone, which successfully integrates a cellular telephone interface with a digital camera lens and a keyboard into one user-friendly portable handheld device. Specifically, to address the problems noted above, what is needed is a multifunction cellular telephone that allows a user to switch from one mode to another mode, utilizing a single mechanical transformation.

### Summary of the Invention

Embodiments of the present invention include an electronic device comprising a first substantially planar panel including a first interface, the first panel having a first axis of rotation perpendicular to the first panel; and a second substantially planar panel including a second interface, the second panel having a second axis of rotation perpendicular to the second panel and rotatably joined to the first panel such that the first axis of rotation and the second axis rotation are co-linear. In a first position, the second interface is obscured by the first panel and in a second position the second interface is exposed. The first panel of the electronic device further includes a display. When the device is configured in the first position, the first interface controls the display and the device. When the device is configured in the second position, the second interface controls the display and the device. Alternatively, when the device is configured in the second position, both interfaces control the display and the device. When the device is configured in the first position, an entry made on the first interface is displayed on the display. When the device is configured in the second position, an entry made on the second interface is displayed on the display. Alternatively, when the device is configured in the second position, entries made on both interfaces are displayed on the display.

The electronic device operates in a first mode when it is configured in the first position. Alternatively, the electronic device operates in a second mode when it is configured in the second position. Preferably, the first panel of the electronic device is operatively coupled to the second panel to allow an exchange of electronic data. Preferably, the electronic device is a handheld portable device.

According to another embodiment of the invention, the first panel of the electronic device further comprises a front side and a back side, wherein the front side of the first panel includes the display and the first interface, and the back side of the first panel includes an engaging end. The second panel further comprises a receiving end. Alternatively, the first panel further comprises a front side and a back side. The front side of the first panel includes the display and the first interface, and the back side of the first panel includes a receiving end. The second panel further comprises an engaging end. In either alternative embodiment, the receiving end receives the engaging end when the device is configured in a position.

In another aspect of the invention, a wireless telecommunications device comprises: a first panel including a front side and a back side, wherein the front side further comprises a display and a telephone interface, the first panel having a first axis of rotation; a second panel including a keyboard, the second panel having a second axis of rotation, the second panel rotatably coupled to the first panel such that in a first position the keyboard is obscured by the first panel, and in a second position the keyboard is exposed, wherein in the first position an entry made on the telephone interface is displayed on the display and in the second position an entry made on the keyboard is displayed on the display; and a digital camera lens mounted to a surface of the back side of the first panel, such that in a first position the camera lens is obscured by the second panel, and in a third position the camera lens is exposed. According to another embodiment of the invention, when the wireless telecommunications device is in the second position, entries made on both the keyboard and the telephone interface are displayed on the display. According to yet another embodiment of the invention, when the wireless telecommunications device is in the third position, the keyboard is obscured.

According to one embodiment of the present invention, the second panel of the wireless telecommunications device rotates in a first direction from the first position toward the second position and the third position. Alternatively, the second panel rotates in a first direction from the first position toward the second position and in a second direction from the first position toward the third position, wherein the second direction is opposite to the first direction.

Preferably, the wireless telecommunications device operates in a first mode when configured in the first position, operates in a second mode when configured in the second position, and operates in a third mode when configured in the third position. Preferably, the first mode is a telephone mode, the second mode is a keyboard mode, and the third mode is a camera mode. Preferably, the keyboard is a qwerty keyboard. Alternatively, the keyboard can be arranged alphabetically or according to some other convenient arrangement. According to the preferred embodiment of the invention, when the device is configured in the second position, the second panel is rotated about 180 degrees from the first panel.

According to another embodiment, when the wireless telecommunications device is in the third position, a button in the telephone interface is configured to operate a digital camera operatively coupled to the camera lens.

According to another embodiment of the invention, the first panel of the wireless telecommunication device further comprises a front side and a back side. The front side of the first panel includes the display and the first interface, and the back side of the first panel includes an engaging end. The second panel further comprises a receiving end. When the wireless telecommunications device is in one of the first position, the second position, and the third position, the receiving end receives the engaging end.

According to another embodiment of the invention, the first panel further comprises a front side and a back side, wherein the front side of the first panel includes the display and the first interface, and the back side of the first panel includes a receiving end. The second panel further comprises an engaging end. When the wireless telecommunications device is in one of the first position, the second position, and the third position, the receiving end receives the engaging end.

### Brief Description of the Drawings

FIGs. 1A and 1B are schematic drawings illustrating the front side of the first panel of the electronic device, which includes the display and the telephone interface, in accordance with the present invention. FIG. 1A shows one embodiment of the invention with the numeric keypad arranged in concentric circles. FIG. 1B illustrates an alternative embodiment, with the numeric keypad in the conventional twelve key arrangement.
FIG. 2 is a schematic drawing illustrating the device configured in the third position, in which the digital camera lens is exposed, in accordance with the present invention.
FIG. 3 is a side view of the first panel and the second panel, while the device is configured in the first position, in accordance with the present invention.
FIG. 4 is a side view of the first panel and the second panel, while the device is configured in the third position, in accordance with the present invention.
FIG. 5 is a schematic drawing showing the device configured in the second position, in which the keyboard is exposed, and several intermediate views, in accordance with the present invention.
FIGs. 6A, 6B, and 6C are schematic drawings illustrating the device shifting from the first position (Fig. 6A) to the third position (Fig. 6B) in a first direction, and then from the first position (Fig. 6A) to the second position (Fig. 6C), in a second direction opposite from the first direction, in accordance with the present invention.
FIGs. 7A, 7B, and 7C are schematic drawings showing the device shifting from the first position (Fig. 7A) to the third position (Fig. 7B), and from the first position (Fig. 7A) to the second position (Fig. 7C), all in one direction, in accordance with the present invention.
FIG. 8 is a schematic drawing showing a front view of the device when the device is in the second position according to the preferred embodiment.
FIG. 9A, 9B, and 9C are schematic drawings of side views of the embodiment shown in FIG. 8. FIG. 9A and 9B show side views of the device in the first position. FIG. 9C show the device in the second position.

### Detailed Description of the Present Invention

An embodiment of the present invention is an electronic device comprising: a first substantially planar panel including a first interface, the first panel having a first axis of rotation perpendicular to the first panel; and a second substantially planar panel including a second interface, the second panel having a second axis of rotation perpendicular to the second panel and rotatably joined to the first panel such that the first axis of rotation and the second axis rotation are co-linear. In a first position the second interface is obscured by the first panel and in a second position the second interface is exposed.

The first panel of the electronic device further includes a display. When the device is configured in the first position, the first interface controls the display. Alternatively, when the device is configured in the second position the second interface controls the display. According to one embodiment of the present invention, the first panel includes a display, such that when the device is configured in the first position, an entry made on the first interface is displayed on the display. When the device is configured in the second position, an entry made on the second interface is displayed on the display. Alternatively, when the device is configured in the second position, entries made on both the first interface and the second interface are displayed on the display. According to another embodiment of the present invention, the device operates in a first mode when configured in the first position and operates in a second mode when configured in the second position.

In one embodiment of the invention, the first panel is operatively coupled to the second panel to allow an exchange of electronic data. In another embodiment of the invention, the device is a portable handheld device.

In yet another embodiment of the invention, the first panel further comprises a front side and a back side, wherein the front side of the first panel includes the display and the first interface, and the back side of the first panel includes an engaging end. The second panel further comprises a receiving end. Alternatively, the first panel further comprises a front side and a back side, wherein the front side of the first panel includes the display and the first interface, and the back side of the first panel includes a receiving end. The second panel further comprises an engaging end. In either alternative embodiment, when the device is configured in the first position, the second position, or the third position, the receiving end receives the engaging end.

The preferred embodiment of the present invention is a wireless telecommunications device comprising a first panel including a display and a telephone interface having a first axis of rotation; a second panel including a keyboard, having a second axis of rotation, such that the first axis of rotation and second axis of rotation are co-linear, and the second panel is rotatably joined to the first panel, and a digital camera lens.

The mode of the device is dependent on the configuration of the device. In the preferred embodiment of the present invention, when the device is configured in a first position, the device operates in a telephone mode. In the first position, the digital camera lens and the keyboard are obscured. Preferably, when the device is configured in a second position, the device operates in a keyboard mode. Thus, when the device is in the second position, the keyboard is exposed. When the device is configured in a third position, the device operates in a camera mode. In the third position, the camera is exposed. Preferably, in the third position, the keyboard is obscured.

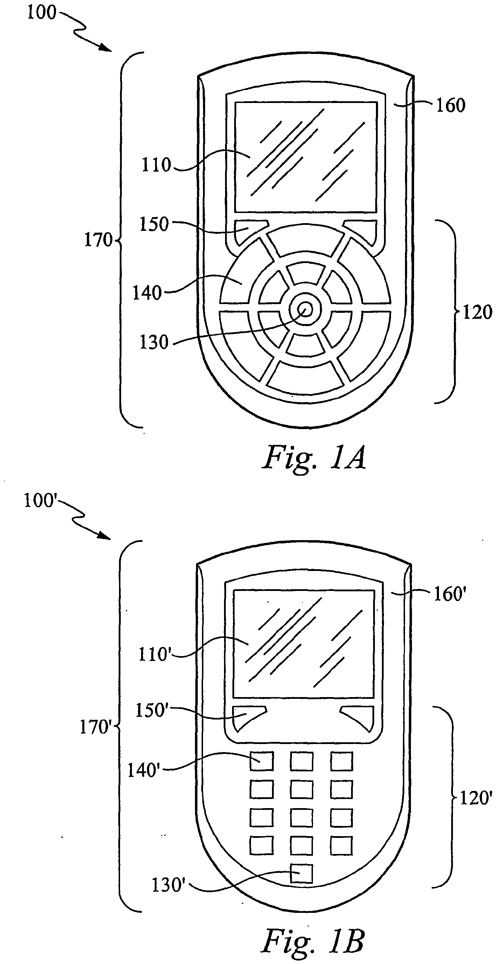

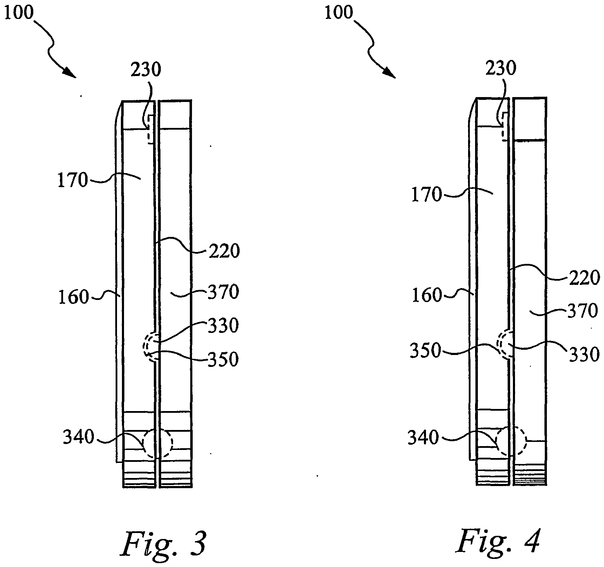

Figures 1A and 1B illustrate a wireless telecommunications device 100, 100' in a first position. The device 100, 100' comprises a first panel 170, 170' which includes a display 110, 110' and a telephone interface 120, 120'. Both Figures 1A and 1B also show a front side 160, 160' of the first panel 170, 170'. The first panel 170, 170' is rotatably mounted over a second panel 370 (Figure 3). In the preferred embodiment, the telephone interface 120, 120' further includes a control button 130, 130', a numeric keypad 140, 140', and function keys 150, 150'. The control button 130, 130' can be configured to operate as a joystick or enter key. When the device 100, 100' is configured in the first position, an entry made on the telephone interface 120, 120' is displayed on the display 110, 110'. The numeric keypad 140 can be arranged in concentric circles (Figure 1A) with a control button 130. Alternatively, the numeric keypad 140' can be arranged in the conventional twelve key arrangement (Figure 1B), with a control button 130'.

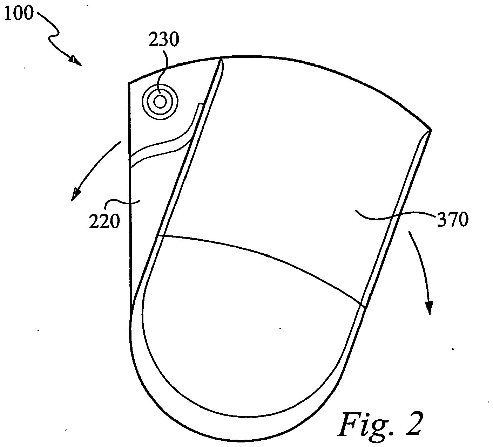

Figure 2 illustrates the back view of the wireless telecommunications device 100 in the third position. As shown in Figure 3, the telecommunications device 100 is configured to the third position by rotating the first panel 170 and the second panel 370 relative to each other about an axis of rotation 340. The first panel 170 (Figure 3) of the device 100 has a back side 220 which includes a digital camera lens 230. As shown in Figures 1A and 1B, when the device 100, 100' is configured in the first position, the digital camera lens 230 (Figure 2) is obscured. But, as shown in Figure 2, when the telecommunications device 100 is configured in the third position, the digital camera lens 230 is exposed. When the telecommunications device 100 is configured in the third position, the display 110, 110' (Figures 1A and 1B) shows what the digital camera lens 230 (Figure 2) sees. A user can then press a designated button on the telephone interface 120, 120' (Figures 1A and 1B). The designated button is configured to operate a digital camera which is operatively coupled to the digital camera lens 230 (Figure 2). Preferably, the designated button is the control button 130'.

Figure 3 is a side view of the telecommunications device 100 in the first position. According to the preferred embodiment, the first panel 170 comprises a front side 160 and a back side 220. The back side 220 of the first panel 170 further comprises the digital camera lens 230. According to the preferred embodiment of the present invention, when the device 100 is configured in the first position, the digital camera lens 230 is obscured by the second panel 370. Furthermore, the first panel 170 is rotatably joined to the second panel 370 at an axis of rotation 340.

Figure 3 further illustrates that the back side 220 of the first panel 170 comprises one or more receiving ends 350. The engaging end 330 and the receiving end 350 are arranged positively when the device is configured in any position. Preferably, the engaging end 330 and the receiving end 350 are arranged positively when the device is configured in the first position, in the second position, or in the third position. Furthermore, any convenient sensor can signal to the device when the device is configured in the first position, in the second position or in the third position.

Figure 4 is a side view of the telecommunications device 100 in the third position. According to the preferred embodiment of the invention, the third position is also known as a camera mode. In the third position, the first panel 170 comprises a front side 160 and a back side 220. The back side 220 of the first panel 170 further comprises a digital camera lens 230 and a receiving end 350. The first panel 170 is rotatably joined to the second panel 370 by an axis of rotation 340. The second panel 370 further comprises an engaging end 330. When the device 100 is configured in the third position, the receiving end 350 receives the engaging end 330.

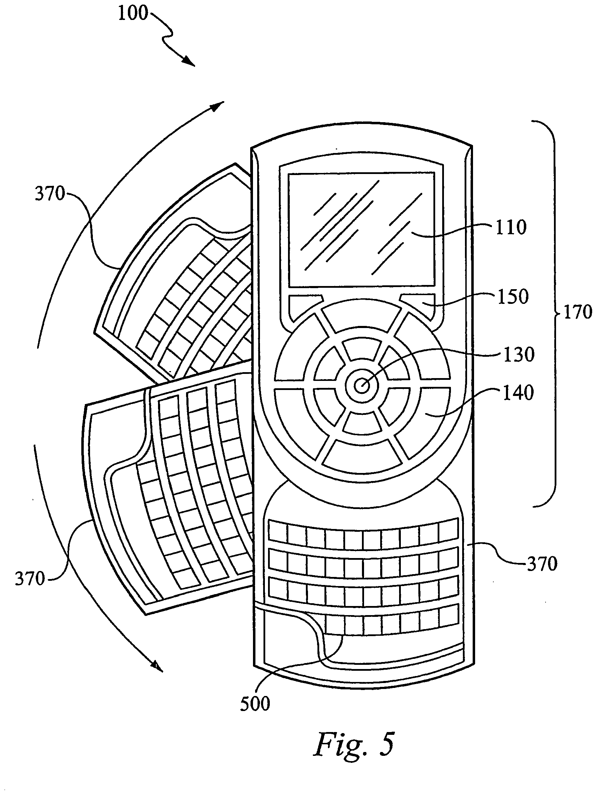

Figure 5 is a pictorial illustrating the wireless telecommunications device 100 configured in the second position. Preferably, when the device 100 is configured in the second position, the device 100 operates in a keyboard mode. According to the preferred embodiment of the present invention, the second panel 370 includes a keyboard 500. The first panel 170 includes a display 110, function keys 150, a control button 130, and a numeric keypad 140. When the user completely rotates the second panel 370 to 180 degrees in relation to the first panel 170, the telecommunications device 100 is configured in the second position. Thus, when the device 100 is configured in the first position or the third position, the keyboard 500 is obscured, whereas when the device 100 is configured in the second position, the keyboard 500 is exposed. Also, when the device 100 is configured in the second position, an entry made on the keyboard 500 is displayed on the display 110 of the first panel 170. Alternatively, when the device 100 is configured in the second position, entries made on both the keyboard 500 and the telephone interface 120, 120' (Figures 1A and 1B) are displayed on the display 110. Furthermore, as previously described, the second panel 370 comprising the keyboard 500 is rotatably joined to the first panel 170, thus allowing a user to switch from the first mode (telephone mode as shown in Figures 1A and 1B) to the second mode (keyboard mode as shown in Figure 5) by rotating the second panel 370 of the device 100 180 degrees in relation to the first panel 170.

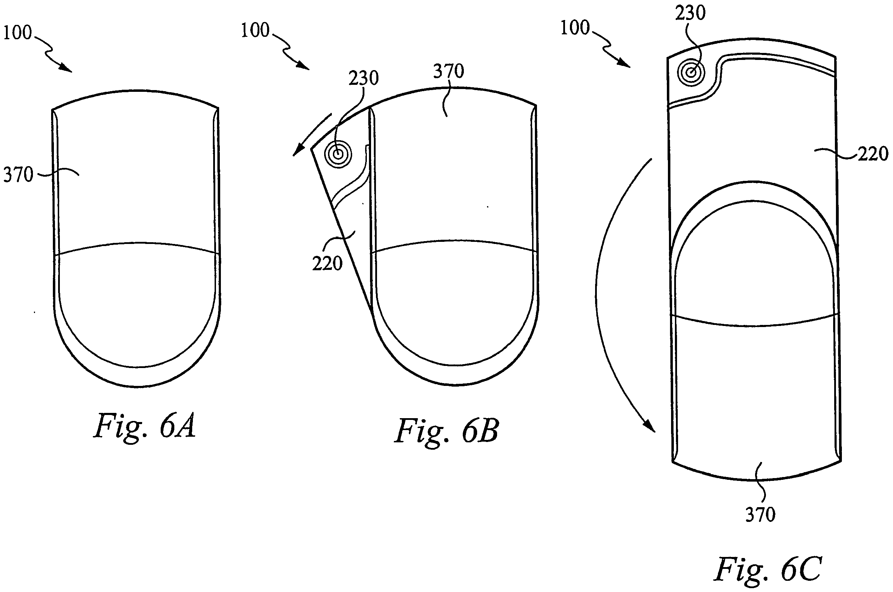

Figures 6A, 6B, and 6C show the device 100 shifting from the first position (Fig. 6A) to the third position (Fig. 6B), in a first direction, and then from the first position (Fig. 6A) to the second position (Fig. 6C), in a second direction opposite from the first direction. Figures 6A, 6B, and 6C illustrate the device 100 from a back view. According to the preferred embodiment of the present invention, as shown in Figure 6A, the wireless telecommunications device 100 is configured in the first position when the keyboard 500 (Figure 5) and the digital camera lens 230 (Figure 2) are obscured by the second panel 370. As previously described, when the device 100 is configured in the first position, the device 100 operates in the telephone mode.

Next, Figure 6B is a pictorial showing the device 100 configured in the third position. According to the preferred embodiment of the invention, the back side 220 of the first panel 170 (Figure 3) further comprises a digital camera lens 230. In the third position, the digital camera lens 230 is exposed and is no longer obscured by the second panel 370. As described previously, the configuration of the device 100 enables for a user to switch from one mode to another. Thus, a user can switch from the telephone mode to the camera mode, by reconfiguring the device 100 from the first position (Figure 6A) to the third position (Figure 6B) in a first direction.

Figure 6C shows the preferred embodiment of the invention of the second position, where the second panel 370 including a keyboard 500 is rotated 180 degrees from the first position (Figure 6A). Referring to Figure 5, when the device 100 is configured in the second position, an entry made on the keyboard 500 is displayed on the display 110. Preferably, the keyboard 500 is a qwerty keyboard. Now referring to Figure 6C, when the telecommunications device 100 is configured in the second position, the device 100 operates in the second mode, which is a keyboard mode, in accordance with the preferred embodiment. Thus, a user can switch from the telephone mode to the keyboard mode, by rotating the second panel 370 from the first position (Figure 6A) to the second position (Figure 6C), in a second direction. In the preferred embodiment, the second direction is opposite from the first direction taken to switch the device 100 from the first position (Figure 6A) to the second position (Figure 6B).

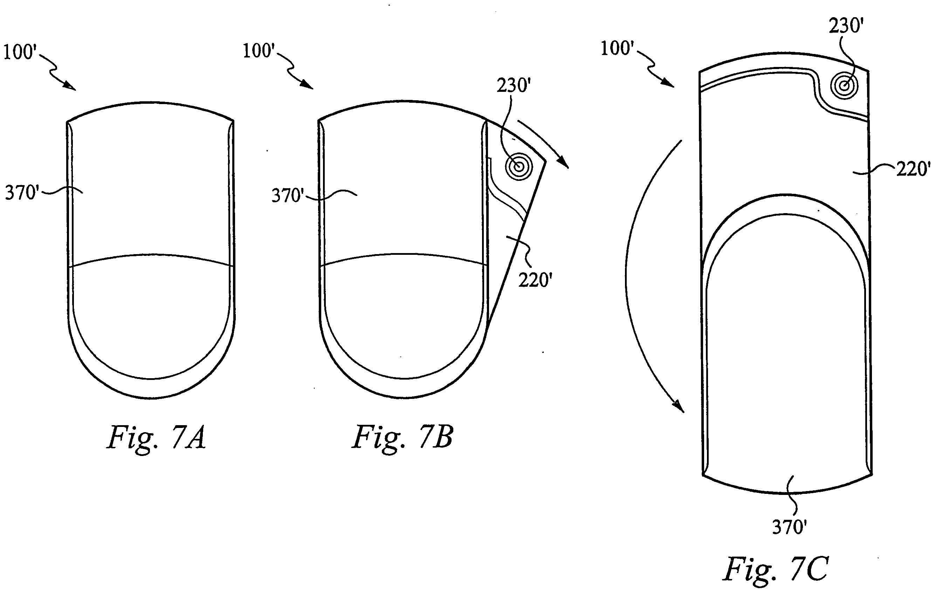

In contrast with Figures 6A, 6B, and 6C, Figures 7A, 7B, and 7C are pictorials illustrating the change of the device 100' configurations from the first position (Fig. 7A), to the third position (Fig. 7B), and finally the second position (Fig. 7C), all in the same direction. As shown in Figure 7A, when the device 100' is in the first position, the second panel 370' obscures the keyboard 500 (Figure 5) and the digital camera lens 230' (Figure 7B). Then, when the user rotates the second panel 370' in a first direction, as shown in Figure 7B, the digital camera lens 230' on the back side 220' of the first panel 170 (Figure 3) is exposed. Figure 7B shows the device 100' configured in the third position. Preferably, when the device 100' is configured in the third position, the telecommunications device 100' operates in the camera mode and the keyboard 500 (Figure 5) is obscured.

If the user rotates the second panel 370' 180 degrees in relation to the first panel 170 (Figure 3), in the first direction, the device 100' is now configured to the second position (Figure 7C). When the device 100' is configured in the second position, the telecommunications device 100' operates in a keyboard mode. While the device 100' operates in the keyboard mode, an entry made on the keyboard 500 (Figure 5) is displayed on the display 110 (Figure 5). As shown in Figure 3 and as described previously, the second panel 370 of the device 100' is rotatably joined to the first panel 170, thus allowing for the second panel 370 to rotate 180 degrees from the first position. Figure 7C shows the device 100' in the second position, where the second panel 370' is positioned 180 degrees in relation to the back side 220' of the first panel 170 (Figure 3).

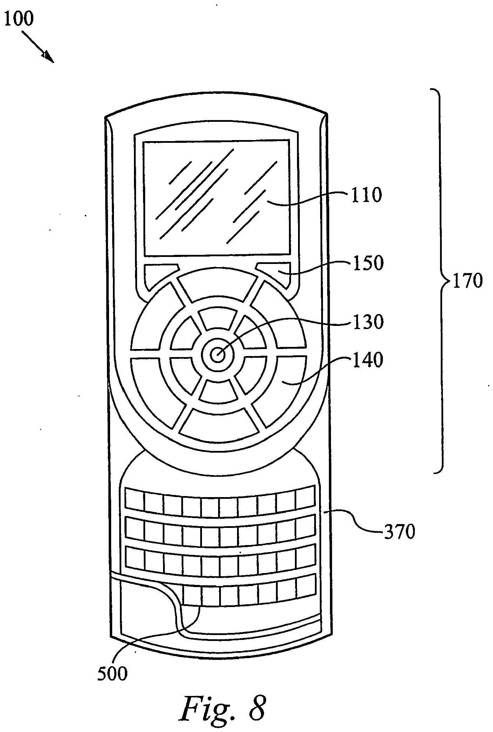

Figure 8 shows the front view of the device 100 when the device 100 is in the second position (the open position). In the preferred embodiment, as shown in Figure 8, the display 110, the control button 130, 130', a numeric keypad 140, 140', the keyboard 500, and function keys 150, 150' are all accessible to the user.

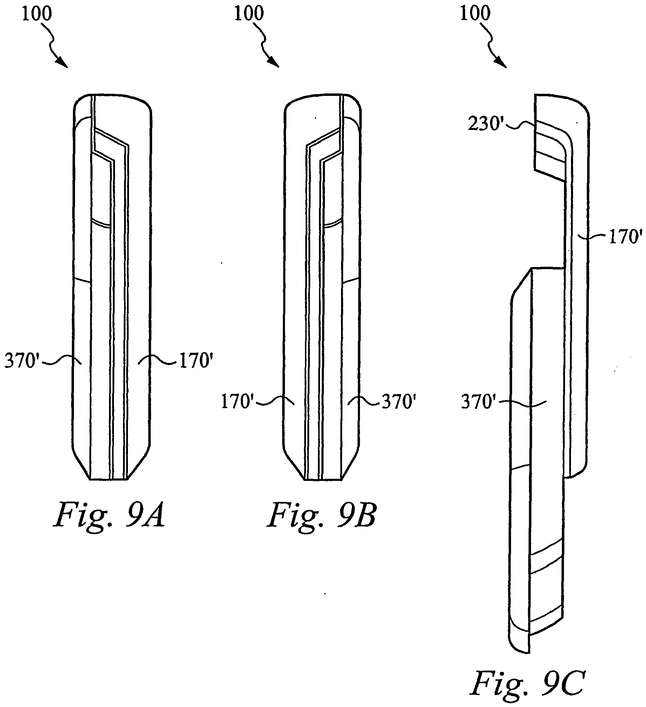

Figures 9A, 9B, and 9C show side views of the embodiment in Figure 8. Figures 9A and 9B show side views of the device 100 in the first position (the closed position). Figure 9C shows a side view of the device 100 when the device 100 is in the second position (the open position).

It will be appreciated by those skilled in the art that the device 100, 100' can further include wireless and/or cable connections to other devices, including but not limited to PC computers, chargers, headphones, PDA devices, cell phone devices, game systems, music listening devices, and the like. Furthermore, it will be appreciated by those skilled in the art that the device 100, 100' can incorporate a tuner, such as a radio tuner, a digital TV tuner chip, a signal frequency tuner, and the like. The device 100, 100' may also include connections, cable, wireless or otherwise, which allow for games and applications to be downloaded and uploaded by the device 100, 100'.

The present invention has been described in terms of specific embodiments incorporating details to facilitate the understanding of the principles of construction and operation of the invention. Such reference herein to specific embodiments and details thereof is not intended to limit the scope of the claims appended hereto. It will be apparent to those skilled in the art that modifications may be made in the embodiment chosen for illustration without departing from the scope of the invention. Thus, it will be apparent to those skilled in the art that although the figures of the device indicate that the receiving end is located on the first panel and the engaging end is located on the second panel, the spirit and scope of the invention allows for the engaging end to be located on the first panel and the receiving end to be located on the second panel.

## Claims

1. A multimode electronic communication device (100, 100') comprising
a) a first substantially planar panel (170, 170') including a telephone interface (120, 120') and a display (110, 110') on a first face of the first panel, the first panel having a single axis of rotation perpendicular to the first panel,
b) a second substantially planar panel (370) including a keyboard interface (500) on a first face of the second panel, the first face of the second panel rotatably and operatively coupled to the second face of the first panel for rotation about the axis such that the first panel is configured to rotate in only one plane relative to the second panel such that in a first rotational orientation
the keyboard interface is obscured by the first panel and in a second rotational orientation the keyboard interface is exposed;
c) means for sensing rotational orientation between the first panel and the second panel, **characterized in that**
in the first rotational orientation the device is adapted to operate as a telephone and input entered on the telephone interface is shown on the display, and, in the second rotational orientation the device is adapted to operate as a messaging device and input entered on the keyboard interface is shown on the display.

2. The device according to claim 1, wherein the first panel includes a display, such that when the device is configured in the first rotational orientation, the telephone interface is adapted to control the display and when the device is configured in the second rotational orientation the keyboard interface is adapted to control the display.

3. The device according to claim 1, wherein the device is adapted to operate in a first mode when configured in the first rotational orientation and to operate in a second mode when configured in the second rotational orientation.

4. The device according to claim 1, wherein the first panel is operatively coupled to the second panel to allow an exchange of electronic data.

5. The device according to claim 1, wherein the device is a portable handheld device.

6. The device according to claim 1, wherein the first panel further comprises a front side and a back side, wherein the front side of the first panel includes the display and the telephone interface, and the back side of the first panel includes an engaging end.

7. The device according to claim 6, wherein the second panel further comprises a receiving end.

8. The device according to claim 7, wherein when the device is configured in one of the first rotational orientation and in the second rotational orientation, the receiving end receives the engaging end.

9. The device according to claim 1, wherein the first panel further comprises a front side and a back side, wherein the front side of the first panel includes the display and the telephone interface, and the back side of the first panel includes a receiving end.

10. The device according to claim 9, wherein the second panel further comprises an engaging end.

11. The device according to claim 10, wherein when the device is configured in one of the first rotational orientation and in the second rotational orientation, the receiving end receives the engaging end.

12. A device according to claim 1 wherein, the second panel is adapted to rotatably couple to the first panel such that in a first position the keyboard is obscured by the first panel, and in a second position the keyboard is exposed, wherein in the first position an entry made on the telephone interface is displayed on the display and in the second position an entry made on the keyboard is displayed on the display, and wherein the first panel comprises a digital camera lens mounted to a surface of the back side of the first panel, such that in the first rotational orientation the camera lens is obscured by the second panel, and in a third rotational orientation the camera lens is exposed.

13. A device according to claim 12, wherein in the second rotational orientation, entries made on both the keyboard and the telephone interface are displayed on the display.

14. A device according to claim 12, wherein in the third rotational orientation, the keyboard is obscured.

15. A device according to claim 12, wherein the second panel is adapted to rotate in a first direction from the first rotational orientation toward the second rotational orientation and the third rotational orientation.

16. A device according to claim 12, wherein the keyboard is a qwerty keyboard.

17. A device according to claim 12, wherein when the device is configured in the second rotational orientation, the second panel is rotated about 180 degrees from the first panel.

18. A device according to claim 12, wherein the second panel is adapted to rotate in a first direction from the first rotational orientation toward the second rotational orientation and in a second direction from the first rotational orientation toward the third rotational orientation, wherein the second direction is opposite to the first direction.

19. A device according to claim 12, wherein the device is adapted to operate in a first mode when configured in the first rotational orientation, the device is adapted to operate in a second mode when configured in the second rotational orientation, and the device is adapted to operate in a third mode when configured in the third rotational orientation.

20. A device according to claim 19, wherein the first mode is a telephone mode, the second mode is a keyboard mode, and the third mode is a camera mode.

21. A device according to claim 20, wherein in the third rotational orientation, a button in the telephone interface is configured to operate a digital camera operatively coupled to the camera lens.

22. A device according to claim 12, wherein in the third mode the display shows what the camera lens sees.

23. A device according to claim 12, wherein the front side of the first panel includes the display and the telephone interface, and the back side of the first panel includes an engaging end.

24. A device according to claim 23, wherein the second panel further comprises a receiving end.

25. A device according to claim 24, wherein when the device is in one of the first rotational orientation, the second rotational orientation, and the third rotational orientation, the receiving end receives the engaging end.

26. A device according to claim 12, wherein the front side of the first panel includes the display and the telephone interface, and the back side of the first panel includes a receiving end.

27. A device according to claim 26, wherein the second panel further comprises an engaging end.

28. A device according to claim 27, wherein when the device is in one of the first rotational orientation, the second rotational orientation, and the third rotational orientation, the receiving end receives the engaging end.

## Patentansprüche

1. Elektronisches Kommunikationsgerät (100, 100') für mehrere Betriebsarten, welches aufweist:
a) eine erste im Wesentlichen flache Tafel (170, 170'), die eine Telefonschnittstelle (120, 120') aufweist, sowie eine Anzeige (110,110') auf einer ersten Seite der ersten Platte, wobei die erste Platte eine einzelne Drehachse hat, die senkrecht zu der ersten Platte verläuft,
b) eine zweite im Wesentlichen ebene Platte (370), die eine Tastaturschnittstelle (500) auf einer ersten Fläche der zweiten Platte aufweist, wobei die erste Fläche der zweiten Platte mit der zweiten Fläche der ersten Platte drehbar und wirksam verbunden ist, um diese um die Achse zu drehen, so dass die erste Platte so ausgestaltet ist, dass sie sich nur in einer Ebene relativ zu der zweiten Platte dreht, so dass in einer ersten Drehausrichtung die Tastaturschnittstelle durch die erste Platte verdeckt wird und in einer zweiten Drehrausichtung die Tastaturschnittstelle freiliegt,
c) Einrichtungen zum Erfassen der Drehausrichtung zwischen der ersten Platte und der zweiten Platte, **dadurch gekennzeichnet, dass**
das Gerät dafür ausgelegt ist, dass es in der ersten Drehausrichtung als ein Telefon arbeitet und auf der Telefonschnittstelle vorgenommene Eingaben auf der Anzeige dargestellt werden, und das Gerät dafür ausgelegt ist, dass es in der zweiten Drehrausichtung als ein Nachrichtengerät dient und Eingaben, die auf der Tastaturschnittstelle vorgenommen werden, auf der Anzeige angezeigt werden.

2. Gerät nach Anspruch 1, wobei die erste Platte eine Anzeige aufweist, so dass dann, wenn das Gerät in der ersten Drehausrichtung ist, die Telefonschnittstelle dafür ausgelegt ist, die Anzeige zu steuern und dann, wenn das Gerät in der zweiten Drehausrichtung ist, die Tastaturschnittstelle dafür ausgelegt ist, die Anzeige zu steuern bzw. zu kontrollieren.

3. Gerät nach Anspruch 1, wobei das Gerät dafür ausgelegt ist, in einer ersten Betriebsart zu arbeiten, wenn es in die erste Drehausrichtung gedreht ist, und in einem zweiten Betriebszustand zu arbeiten, wenn es in der zweiten Drehausrichtung gedreht ist.

4. Gerät nach Anspruch 1, wobei die erste Platte mit der zweiten Platte wirksam verbunden ist, um einen Austausch elektronischer Daten zu ermöglichen.

5. Gerät nach Anspruch 1, wobei das Gerät ein tragbares, in der Hand zu haltendes Gerät ist.

6. Gerät nach Anspruch 1, wobei die erste Platte weiterhin eine Vorderseite und eine Rückseite aufweist, wobei die Vorderseite der ersten Platte die Anzeige und die Telefonschnittstelle aufweist und die Rückseite der ersten Platte ein Eingriffsende aufweist.

7. Gerät nach Anspruch 6, wobei die zweite Platte weiterhin ein Aufnahmeende aufweist.

8. Gerät nach Anspruch 7, wobei dann, wenn das Gerät entweder in der ersten Drehausrichtung oder in der zweiten Drehausrichtung gedreht ist, das Aufnahmeende das Eingriffsende aufnimmt.

9. Gerät nach Anspruch 1, wobei die erste Platte weiterhin eine Vorderseite und eine Rückseite aufweist, wobei die Vorderseite der ersten Platte die Anzeige und die Telefonschnittstelle aufweist und die Rückseite der ersten Platte ein Aufnahmeende aufweist.

10. Gerät nach Anspruch 9, wobei die zweite Platte weiterhin ein Eingriffsende aufweist.

11. Gerät nach Anspruch 10, wobei dann, wenn das Gerät entweder in der ersten Drehausrichtung oder in der zweiten Drehausrichtung gedreht ist, das Aufnahmeende das Eingriffsende aufnimmt.

12. Gerät nach Anspruch 1, wobei die zweite Platte dafür ausgelegt ist, mit der ersten Platte drehbar verbunden zu sein, so dass in einer ersten Position die Tastatur durch die erste Platte verdeckt ist und in einer zweiten Position die Tastatur freiliegt, wobei in der ersten Position ein auf der Telefonschnittstelle vorgenommener Eintrag auf der Anzeige angezeigt wird und in der zweiten Position ein auf der Tastatur vorgenommener Eintrag auf der Anzeige angezeigt wird, und wobei die erste Platte eine digitale Kameralinse aufweist, die auf einer Oberfläche der Rückseite der ersten Platte montiert ist, so dass in der ersten Drehausrichtung die Kameralinse durch die zweite Platte verdeckt ist und in einer dritten Drehausrichtung die Kameralinse freiliegt.

13. Gerät nach Anspruch 12, wobei in der zweiten Drehausrichtung Einträge sowohl von der Tastatur als auch von der Telefonschnittstelle auf der Anzeige angezeigt werden.

14. Gerät nach Anspruch 12, wobei in der dritten Drehausrichtung die Tastatur verdeckt ist.

15. Gerät nach Anspruch 12, wobei die zweite Platte dafür ausgelegt ist, ausgehend von der ersten Drehausrichtung in einer ersten Richtung zu der zweiten Drehausrichtung und der dritten Drehausrichtung gedreht zu werden.

16. Gerät nach Anspruch 12, wobei die Tastatur eine qwerty-Tastatur ist.

17. Gerät nach Anspruch 12, wobei dann, wenn das Gerät sich in der zweiten Drehausrichtung befindet, die zweite Platte um etwa 180° gegenüber der ersten Platte verdreht ist.

18. Gerät nach Anspruch 12, wobei die zweite Platte dafür ausgelegt ist, sich ausgehend von der ersten Drehausrichtung in einer ersten Richtung in Richtung einer zweiten Drehausrichtung zu drehen und ausgehend von der ersten Drehausrichtung sich in einer zweiten Richtung zu der dritten Drehorientierung zu drehen, wobei die zweite Richtung der ersten Richtung entgegengesetzt ist.

19. Gerät nach Anspruch 12, wobei das Gerät dafür ausgelegt ist, in einem ersten Betriebszustand zu arbeiten, wenn es sich in der ersten Drehausrichtung befindet, wobei das Gerät dafür ausgelegt ist, in einem zweiten Betriebszustand zu arbeiten, wenn es sich in der zweiten Drehausrichtung befindet, und das Gerät dafür ausgelegt ist, in einem dritten Betriebszustand zu arbeiten, wenn es sich in der dritten Drehausrichtung befindet.

20. Gerät nach Anspruch 19, wobei die erste Betriebsart ein Telefonbetrieb ist, die zweite Betriebsart ein Tastaturbetrieb ist und die dritte Betriebsart ein Kamerabetrieb ist.

21. Gerät nach Anspruch 20, wobei in der dritten Drehausrichtung ein Knopf in der Telefonschnittstelle dafür ausgelegt ist, eine digitale Kamera zu betätigen, die wirksam mit der Kameralinse verbunden ist.

22. Gerät nach Anspruch 12, wobei in der dritten Betriebsart die Anzeige das wiedergibt, was die Kameralinse sieht.

23. Gerät nach Anspruch 12, wobei die Vorderseite der ersten Platte die Anzeige und die Telefonschnittstelle aufweist und die Rückseite der ersten Platte ein Eingriffsende aufweist.

24. Gerät nach Anspruch 23, wobei die zweite Platte weiterhin ein Aufnahmeende aufweist.

25. Gerät nach Anspruch 24, wobei dann, wenn das Gerät sich entweder in der ersten Drehausrichtung, der zweiten Drehausrichtung oder der dritten Drehausrichtung befindet, das Aufnahmeende das Eingriffsende aufnimmt.

26. Gerät nach Anspruch 12, wobei die Vorderseite der ersten Platte die Anzeige und die Telefonschnittstelle aufweist und die Rückseite der ersten Platte ein Aufnahmeende aufweist.

27. Gerät nach Anspruch 26, wobei die zweite Platte weiterhin ein Eingriffsende aufweist.

28. Gerät nach Anspruch 27, wobei dann, wenn das Gerät sich entweder in der ersten Drehausrichtung, der zweiten Drehausrichtung oder der dritten Drehausrichtung befindet, das Aufnahmeende das Eingriffsende aufnimmt.

## Revendications

1. Dispositif de communication électronique multimode (100, 100') comprenant :
a) un premier panneau sensiblement plan (170, 170') incluant une interface de téléphone (120, 120') et un affichage (110, 110') sur une première face du premier panneau, le premier panneau ayant un unique axe de rotation perpendiculaire au premier panneau,
b) un deuxième panneau sensiblement plan (370) incluant une interface de clavier (500) sur une première face du deuxième panneau, la première face du deuxième panneau étant couplée de manière rotative et fonctionnelle à la deuxième face du premier panneau afin de tourner autour de l'axe de sorte que le premier panneau soit configuré pour tourner dans uniquement un plan par rapport au deuxième panneau de sorte que dans une première orientation de rotation
l'interface de clavier soit masquée par le premier panneau et que dans une deuxième orientation de rotation l'interface de clavier soit exposée ;
c) un moyen pour détecter une orientation de rotation entre le premier panneau et le deuxième panneau, **caractérisé en ce que**
dans la première orientation de rotation, le dispositif est adapté pour fonctionner comme un téléphone et une entrée entrée sur l'interface de téléphone est présentée sur l'affichage, et, dans la deuxième orientation de rotation, le dispositif est adapté pour fonctionner comme un dispositif de messagerie électronique et une entrée entrée sur l'interface de clavier est présentée sur l'affichage.

2. Dispositif selon la revendication 1, dans lequel le premier panneau inclut un affichage, de sorte que, quand le dispositif est configuré dans la première orientation de rotation, l'interface de téléphone soit adaptée pour commander l'affichage et que, quand le dispositif est configuré dans la deuxième orientation de rotation, l'interface de clavier soit adaptée pour commander l'affichage.

3. Dispositif selon la revendication 1, dans lequel le dispositif est adapté pour fonctionner dans un premier mode quand il est configuré dans la première orientation de rotation et pour fonctionner dans un deuxième mode quand il est configuré dans la deuxième orientation de rotation.

4. Dispositif selon la revendication 1, dans lequel le premier panneau est couplé de manière fonctionnelle au deuxième panneau pour permettre un échange de données électroniques.

5. Dispositif selon la revendication 1, dans lequel le dispositif est un dispositif portable.

6. Dispositif selon la revendication 1, dans lequel le premier panneau comprend en outre un côté avant et un côté arrière, dans lequel le côté avant du premier panneau inclut l'affichage et l'interface de téléphone, et le côté arrière du premier panneau inclut une extrémité d'accouplement.

7. Dispositif selon la revendication 6, dans lequel le deuxième panneau comprend en outre une extrémité de réception.

8. Dispositif selon la revendication 7, dans lequel, lorsque le dispositif est configuré dans l'une des orientations, à savoir dans la première orientation de rotation ou dans la deuxième orientation de rotation, l'extrémité de réception reçoit l'extrémité d'accouplement.

9. Dispositif selon la revendication 1, dans lequel le premier panneau comprend en outre un côté avant et un côté arrière, dans lequel le côté avant du premier panneau inclut l'affichage et l'interface de téléphone, et le côté arrière du premier panneau inclut une extrémité de réception.

10. Dispositif selon la revendication 9, dans lequel le deuxième panneau comprend en outre une extrémité d'accouplement.

11. Dispositif selon la revendication 10, dans lequel, lorsque le dispositif est configuré dans l'une des orientations, à savoir dans la première orientation de rotation ou dans la deuxième orientation de rotation, l'extrémité de réception reçoit l'extrémité d'accouplement.

12. Dispositif selon la revendication 1, dans lequel le deuxième panneau est adapté pour s'accoupler de manière rotative au premier panneau de sorte que, dans une première position, le clavier soit masqué par le premier panneau, et que, dans une deuxième position, le clavier soit exposé, dans lequel dans la première position une entrée effectuée sur l'interface de téléphone est présentée sur l'affichage et dans la deuxième position une entrée effectuée sur le clavier est présentée sur l'affichage, et dans lequel le premier panneau comprend un objectif numérique monté sur une surface du côté arrière du premier panneau, de sorte que, dans la première orientation de rotation, l'objectif soit masqué par le deuxième panneau, et que, dans une troisième orientation de rotation, l'objectif soit exposé.

13. Dispositif selon la revendication 12, dans lequel, dans la deuxième orientation de rotation, des entrées effectuées à la fois sur le clavier et l'interface de téléphone sont présentées sur l'affichage.

14. Dispositif selon la revendication 12, dans lequel, dans la troisième orientation de rotation, le clavier est masqué.

15. Dispositif selon la revendication 12, dans lequel le deuxième panneau est adapté pour tourner dans une première direction de la première orientation de rotation vers la deuxième orientation de rotation et la troisième orientation de rotation.

16. Dispositif selon la revendication 12, dans lequel le clavier est un clavier qwerty.

17. Dispositif selon la revendication 12, dans lequel, quand le dispositif est configuré dans la deuxième orientation de rotation, le deuxième panneau est pivoté de 180 degrés par rapport au premier panneau.

18. Dispositif selon la revendication 12, dans lequel le deuxième panneau est adapté pour tourner dans une première direction de la première orientation de rotation vers la deuxième orientation de rotation et dans une deuxième direction de la première orientation de rotation vers la troisième orientation de rotation, la deuxième direction étant opposée à la première direction.

19. Dispositif selon la revendication 12, dans lequel le dispositif est adapté pour fonctionner dans un premier mode quand il est configuré dans la première orientation de rotation, le dispositif est adapté pour fonctionner dans un deuxième mode quand il est configuré dans la deuxième orientation de rotation, et le dispositif est adapté pour fonctionner dans un troisième mode quand il est configuré dans la troisième orientation de rotation.

20. Dispositif selon la revendication 19, dans lequel le premier mode est un mode téléphone, le deuxième mode est un mode clavier, et le troisième mode est un mode caméra.

21. Dispositif selon la revendication 20, dans lequel, dans la troisième orientation de rotation, un bouton de l'interface de téléphone est configuré pour commander une caméra numérique couplée de manière fonctionnelle à l'objectif.

22. Dispositif selon la revendication 12, dans lequel, dans le troisième mode, l'affichage montre que l'objectif fonctionne.

23. Dispositif selon la revendication 12, dans lequel le côté avant du premier panneau inclut l'affichage et l'interface de téléphone, et le côté arrière du premier panneau inclut une extrémité d'accouplement.

24. Dispositif selon la revendication 23, dans lequel le deuxième panneau comprend en outre une extrémité de réception.

25. Dispositif selon la revendication 24, dans lequel, lorsque le dispositif est dans l'une des orientations suivantes, à savoir dans la première orientation de rotation, la deuxième orientation de rotation, ou la troisième orientation de rotation, l'extrémité de réception reçoit l'extrémité d'accouplement.

26. Dispositif selon la revendication 12, dans lequel le côté avant du premier panneau inclut l'affichage et l'interface de téléphone, et le côté arrière du premier panneau inclut une extrémité de réception.

27. Dispositif selon la revendication 26, dans lequel le deuxième panneau comprend en outre une extrémité d'accouplement.

28. Dispositif selon la revendication 27, dans lequel, lorsque le dispositif est dans l'une des orientations suivantes, à savoir dans la première orientation de rotation, la deuxième orientation de rotation, ou la troisième orientation de rotation, l'extrémité de réception reçoit l'extrémité d'accouplement.
